# FASCICULE DE BREVET EUROPEEN

(11) **EP 1 593 190 B1**
(45) Date de publication et mention de la délivrance du brevet: **16.07.2008**
(21) Numéro de dépôt: 04709253.1
(22) Date de dépôt: 09.02.2004
(51) Int. Cl.: H02K 1/14, H02K 1/02

(54) **STATOR POUR MOTEUR ELECTRIQUE A FLUX AXIAL**
STÄNDER FÜR ELEKTROMOTOR MIT AXIALEM FLUSS
STATOR FOR AXIAL FLUX ELECTRIC MOTOR

(30) Priorité: 12.02.2003 FR 0301659
(43) Date de publication de la demande: 09.11.2005
(73) Titulaire: SEB S.A., 69130 Ecully (FR)
(72) Inventeur: GARRIGUES, Patrick, F-65260 Pierrefitte-Nestalas (FR)
(74) Mandataire: Kiehl, Hubert
(86) Numéro de dépôt international: PCT/FR2004/000290
(87) Numéro de publication internationale: WO 2004/075376

(56) Documents cités:
- DE-A- 10 048 492
- US-A1- 2002 067 091
- PATENT ABSTRACTS OF JAPAN vol. 2000, no. 19, 5 juin 2001 (2001-06-05) -& JP 2001 037107 A (HITACHI FERRITE ELECTRONICS LTD), 9 février 2001 (2001-02-09)
- PATENT ABSTRACTS OF JAPAN vol. 1998, no. 10, 31 août 1998 (1998-08-31) & JP 10 145990 A (MEIDENSHA CORP), 29 mai 1998 (1998-05-29)

## Description

La présente invention se rapporte au domaine technique général des moteurs électriques à flux axial. Les moteurs du type précité comportent un stator présentant une partie magnétique plane garnie de noyaux s'étendant perpendiculairement à ladite partie plane et un rotor dont l'axe de rotation est parallèle aux axes d'extension des noyaux. Chaque noyau reçoit une bobine. Les bobines peuvent être câblées pour constituer une ou plusieurs phases. La présente invention concerne notamment, mais non exclusivement, les moteurs à commutation électronique.

Il a été proposé dans le document US 6 132 186 de réaliser un moteur du type précité dans lequel le stator comprend une masse de particules métalliques présentant des propriétés magnétiques. Le stator peut être obtenu selon un procédé traditionnel de métallurgie des poudres, consistant à former une mixture de particules et de lubrifiant, à compresser uniaxialement ladite mixture pour obtenir une pièce crue, chauffer ladite pièce pour pyrolyser le lubrifiant, éventuellement fritter ladite pièce, puis la refroidir.

Pour des pièces dont le diamètre dépasse quelques centimètres, la taille de la presse nécessaire pour compacter suffisamment la masse de particules magnétiques devient très importante, ce qui entraîne des coûts d'investissement élevés.

Un stator pour moteur électrique à flux axial selon le préambule de la revendication 1 est connu du document US 2002/067091.

Le but de la présente invention est de proposer un stator pour moteur électrique à flux axial, dont la production soit plus économique, sans que les propriétés magnétiques soient dégradées de manière importante.

Ce but est atteint avec un stator pour moteur électrique à flux axial selon les caractéristiques de la revendication 1.

En d'autres termes, chaque noyau est formé au moins partiellement par une ou plusieurs des pièces réalisées à partir de poudre de matériau magnétique compactée. Chaque noyau peut être réalisé en une seule pièce. Ces pièces peuvent former un seul des noyaux. Chaque noyau est alors constitué d'une pièce assemblée avec la base, la base pouvant ou non être réalisée à partir de poudre de matériau magnétique compactée. Les surfaces d'emboîtement sont alors ménagées autour des noyaux et dans la base. Ces pièces peuvent également former plusieurs noyaux. Ces pièces forment alors au moins une partie de la base. Les surfaces d'emboîtement sont alors ménagées dans la base. En alternative, chaque noyau peut être constitué de plusieurs pièces, ces pièces étant issues ou non de la base. Notamment, une pièce peut être rapportée sur une protubérance issue de la base, ou dans un logement de la base, pour former au moins partiellement un noyau.

L'isotropie des propriétés magnétiques de la poudre de matériau magnétique compactée permet de simplifier la réalisation des noyaux tout en bénéficiant de propriétés magnétiques favorables. Il n'est pas nécessaire que tout le stator soit réalisé à partir de poudre de matériau magnétique compactée. En effet le flux magnétique dans la base du stator est agencé essentiellement dans le plan de la base. De ce fait, des matériaux magnétiques anisotropiques tels que des tôles magnétiques peuvent être utilisés sans difficultés d'agencement particulières pour la base du stator. Au contraire, l'utilisation de poudre de matériau magnétique compactée permet de simplifier la réalisation des noyaux. L'utilisation de pièces emboîtées permet de réduire la taille des éléments du stator réalisés à partir de poudre de matériau magnétique compactée. Ainsi le coût des investissements nécessaires pour la production des éléments réalisés à partir de poudre de matériau magnétique compactée peut être réduit.

Avantageusement alors les surfaces d'emboîtement sont définies par une génératrice parallèle à la direction axiale. En d'autres termes, il n'est pas nécessaire de prévoir une dépouille importante. En effet, les pièces réalisées à partir de poudre de matériau magnétique compactée se démoulent aisément. Cette disposition simplifie notoirement la réalisation des pièces obtenues à partir de poudre de matériau magnétique compactée. Les surfaces d'emboîtement peuvent être saillantes et/ou rentrantes. Cette disposition facilite la réalisation des pièces obtenues à partir de poudre de matériau magnétique compactée. Cette disposition permet aussi d'obtenir une cohésion du stator pour les efforts perpendiculaires à la direction axiale.

Pour simplifier encore la réalisation des pièces obtenues à partir de poudre de matériau magnétique compactée, la ou les faces supérieures desdites pièces peuvent être perpendiculaires à la direction axiale, et/ou la ou les faces inférieures desdites pièces peuvent être perpendiculaires à la direction axiale, et/ou la ou les faces latérales desdites pièces peuvent être définies par une génératrice parallèle à la direction axiale.

Avantageusement encore, les surfaces d'emboîtement sont dépourvues d'arête. Cette disposition permet de diminuer la résistance au passage du flux magnétique et permet d'obtenir une meilleure conservation du flux magnétique.

Selon un mode de réalisation, au moins deux des pièces constituant au moins partiellement un des noyaux constituent aussi une partie de la base. Cette disposition permet d'utiliser un seul type de pièce pour réaliser le stator, et donc un seul type de moule. Lesdites pièces peuvent alors avantageusement constituer plusieurs noyaux issus d'une portion de la base, afin de réduire le nombre de pièces à assembler.

Avantageusement alors, les surfaces d'emboîtement desdites pièces sont ménagées dans la base. Cette disposition permet de simplifier la réalisation des pièces. En outre cette disposition d'interface contribue à réduire les perturbations apportées au flux magnétique.

Selon un autre mode de réalisation, au moins une des pièces constituant au moins partiellement l'un des noyaux comporte une racine, respectivement un logement, monté(e) dans un logement, respectivement sur une racine, ménagé(e) dans/sur la ou l'une des pièces constituant la base, les surfaces d'emboîtement étant formées respectivement par une paroi latérale de la racine et par une paroi latérale du logement. Cette disposition permet de réduire la hauteur du ou des moules de la base lorsque la base est réalisée à partir de poudre de matériau magnétique compactée. Cette disposition permet également de réaliser la base dans un matériau magnétique différent du ou des matériaux magnétiques utilisés pour les pièces formant les noyaux. La base peut par exemple être réalisée à partir de tôles magnétiques empilées alors que les noyaux sont réalisés à partir de poudre de matériau magnétique compactée.

Avantageusement au moins l'un des noyaux présente une paroi latérale prolongeant la paroi latérale formant la surface d'emboîtement de la racine. Cette disposition permet de simplifier la réalisation des pièces constituant les noyaux.

Avantageusement alors au moins l'un des logements traverse la ou l'une des pièces constituant au moins une partie de la base. En d'autres termes, ledit logement ne présente pas de fond. Un tel logement est débouchant. Cette disposition permet de simplifier la réalisation de la pièce constituant au moins une partie de la base. Cette pièce peut être définie par une face supérieure, une face inférieure, et une ou plusieurs faces latérales.

Selon une forme de réalisation avantageuse, au moins l'un des noyaux présente un montant surmonté d'un chapeau. Le chapeau peut alors recouvrir au moins partiellement la bobine placée autour du montant. De préférence, chacun des noyaux présente un montant surmonté d'un chapeau. Cette disposition permet d'obtenir une surface d'échange plus importante pour le flux magnétique entre le stator et le rotor, et donc d'obtenir un couple plus important. Les noyaux peuvent être réalisés en une ou en plusieurs pièces. Notamment, le montant n'est pas nécessairement issu de la même pièce que le chapeau. Avantageusement, le montant est formé par une ou plusieurs pièces réalisées à partir de poudre de matériau magnétique compactée. Cette disposition permet de réduire considérablement les courants de Foucault contribuant à l'échauffement de la partie magnétique. Les échauffements observés sont ainsi minimes.

Avantageusement alors au moins une des pièces constituant partiellement l'un des noyaux comporte un tenon, respectivement un logement, monté dans un logement, respectivement sur un tenon, ménagé dans/sur une autre des pièces constituant partiellement ledit noyau, les surfaces d'emboîtement étant formées respectivement par une paroi latérale du tenon et par une paroi latérale du logement.

Alors, selon une forme de réalisation avantageuse, la ou l'une des pièces constituant au moins partiellement le montant de l'un des noyaux constitue aussi au moins une partie de la base.

Selon une forme de réalisation, la ou au moins l'une des pièces constituant la base est réalisée à partir de tôles magnétiques empilées. Cette disposition permet de réduire l'épaisseur de la base, la permittivité de la tôle magnétique étant supérieure à la permittivité des poudres de matériau magnétique compactées actuellement disponibles.

Selon une autre forme de réalisation, la ou les pièces constituant la base est/sont réalisée(s) à partir de poudre de matériau magnétique compactée. La base peut alors notamment être réalisée en plusieurs pièces, cette disposition permettant de réduire le volume de chacune des pièces formant une partie de la base, et ainsi, de limiter la taille de la presse nécessaire pour la réalisation desdites pièces.

Avantageusement encore la base présente une configuration annulaire. Cette disposition permet de réduire la quantité de matière magnétique utilisée, sans affecter les performances du moteur, la masse magnétique disposée au centre de la base ne jouant pas un rôle actif. Cette disposition permet également de faciliter l'intégration d'un autre élément, tel que par exemple un accélérateur ou un réducteur.

Avantageusement le stator comporte au moins deux pièces identiques réalisées à partir de poudre de matériau magnétique compactée. Cette disposition contribue à réduire le nombre de moules nécessaires.

Avantageusement encore les noyaux s'étendent à partir d'un plan supérieur de la base. Avantageusement encore la base comporte un plan inférieur agencé à l'opposé du plan supérieur. Avantageusement encore les noyaux présentent une face supérieure plane. Avantageusement encore les parois latérales des noyaux sont définies par une génératrice parallèle à la direction axiale. Avantageusement encore les parois latérales de la base sont définies par une génératrice parallèle à la direction axiale. Avantageusement alors le stator est défini par un premier plan formant la partie inférieure de la base, un deuxième plan formant la partie supérieure de la base et un troisième plan formant le sommet des noyaux, lesdits plans étant perpendiculaires à la direction axiale. Ces différentes dispositions permettent de faciliter l'obtention du stator.

Selon un mode de réalisation avantageux, au moins l'une des pièces constituant au moins partiellement l'un des noyaux constitue aussi une partie de la base. Cette disposition permet de favoriser la circulation du flux magnétique dans la base. L'interface entre les deux pièces peut être en grande partie normale au flux magnétique.

Si désiré, au moins l'une des pièces constituant la base peut être réalisée à partir de tôles magnétiques empilées, par exemple une pièce dépourvue de noyaux destinés à recevoir les bobines.

Selon un mode de réalisation préféré, la base est réalisée en plusieurs pièces assemblées comportant des surfaces d'emboîtement.

L'invention sera mieux comprise à l'étude de deux exemples de réalisation et de variantes, pris à titre nullement limitatif, et illustrés dans les figures annexées dans lesquelles :
- la figure 1 est une vue en perspective d'un premier exemple de réalisation d'un stator selon l'invention, associé à un rotor, dans lequel la base du stator est réalisée en plusieurs pièces,
- la figure 2 est une vue en éclaté du stator présenté à la figure 1,
- la figure 3 est une vue partielle en coupe d'un deuxième exemple de réalisation d'un stator selon l'invention, dans lequel les noyaux et la base sont formés par des pièces différentes,
- les figures 4, 5 et 6 sont des variantes de réalisation du deuxième exemple de réalisation illustré à la figure 3, présentant d'autres assemblages entre les noyaux et la base,
- les figures 7, 8 et 9 sont des variantes de réalisation du deuxième exemple de réalisation illustré à la figure 3, dans lesquelles les noyaux présentent un chapeau,
- les figures 10 et 11 sont des variantes de réalisation du deuxième exemple de réalisation illustré à la figure 3, dans lesquelles une partie des noyaux est solidaire de la base.
- la figure 12 est une variante de réalisation du deuxième exemple de réalisation illustré à la figure 3, dans laquelle la base est réalisée à partir de tôles magnétiques,
- les figures 13 à 16 sont des variantes de réalisation du deuxième exemple de réalisation illustré à la figure 3, dans lesquelles la base est réalisée à partir de plusieurs pièces assemblées.

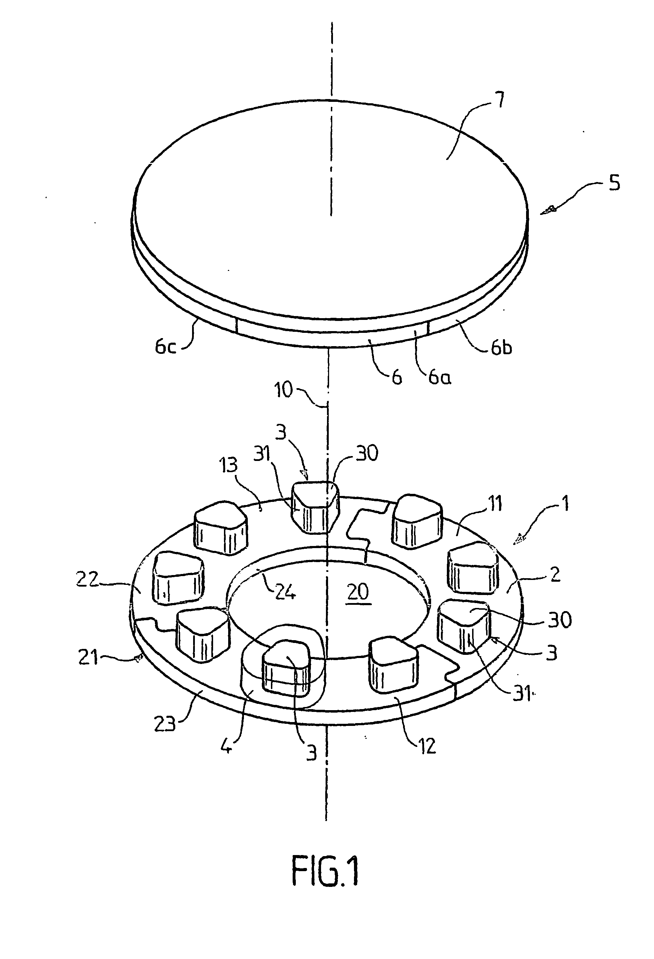

La figure 1 montre un stator 1 et un rotor 5 pour un moteur électrique à flux axial, notamment à commutation électronique. Le stator 1 est réalisé à partir de poudre de matériau magnétique tel que de la poudre de fer type Somalloy 500 ou 550 de la société Hôganâs. Le stator 1 comporte une base 2 sur laquelle s'élèvent des noyaux 3 selon une direction axiale 10. La direction axiale 10 correspond à l'axe de rotation du rotor 5. Le stator 1 comporte neuf noyaux 3. Les noyaux 3 sont agencés en cercle sur la base 2. Chaque noyau 3 est prévu pour recevoir une bobine destinée à transmettre le flux magnétique à un aimant permanent 6 du rotor 5. Par souci de clarté, seule une bobine 4 est représentée. Les bobines 4 peuvent notamment être alimentées en triphasé. L'aimant permanent 6 est monté sur un support métallique 7 permettant la fermeture du flux magnétique. L'aimant permanent 6 comporte par exemple six pôles. Trois de ces pôles 6a, 6b, 6c sont visibles à la figure 1.

La base 2 est annulaire et présente un passage central 20. Les noyaux 3 sont agencés en cercle autour du passage 20. La base 2 comprend une face inférieure 21 plane et une face supérieure 22 plane de laquelle s'élèvent les noyaux 3. Les faces inférieure 21 et supérieure 22 sont reliées par une face latérale extérieure 23 et par une face latérale intérieure 24.

Les faces latérales 23, 24 de la base 2 et la face latérale 31 des noyaux 3 sont définies par des génératrices évoluant selon la direction axiale 10. Les faces inférieure 21 et supérieure 22 de la base 2 et les faces supérieures 30 des noyaux 3 sont planes. Les faces inférieure 21 et supérieure 22 de la base 2 et les faces supérieures 30 des noyaux 3 sont perpendiculaires à la direction axiale 10.

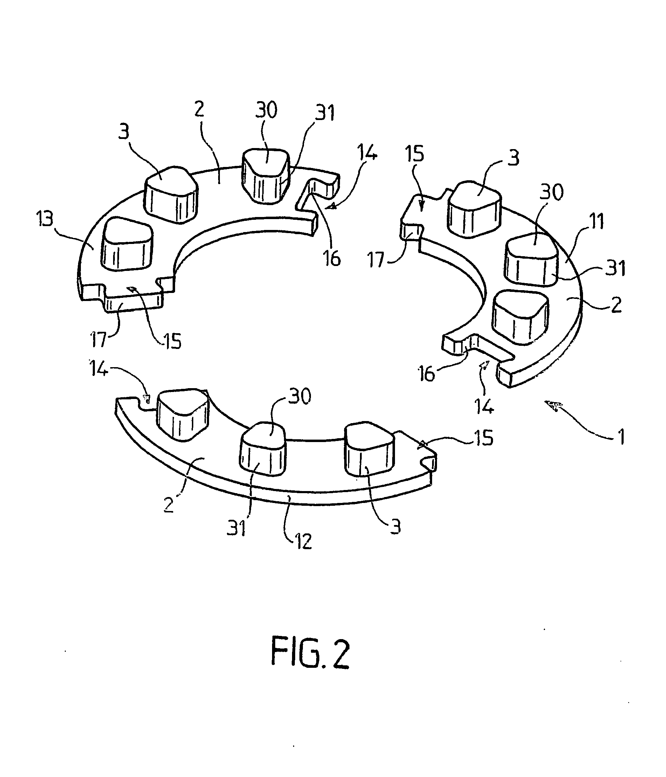

Le stator 1 est constitué de plusieurs pièces 11, 12, 13, mieux visibles à la figure 2. Chaque pièce 11, 12, 13 comporte trois noyaux 3 et forme une partie de la base 2. Chaque pièce 11, 12, 13 présente deux conformations d'assemblage 14, 15 prévues pour s'emboîter respectivement avec une conformation d'assemblage 15 d'une autre des pièces 12, 13, 11 et avec une conformation d'assemblage 14 de l'autre des pièces 13, 11, 12. Les conformations d'assemblage 14 sont rentrantes et les conformations d'assemblage 15 sont saillantes.

Chaque conformation d'assemblage 14, 15 présente une surface d'emboîtement 16, 17 définie par une génératrice parallèle à la direction axiale 10. Pour une meilleure conservation du flux magnétique, les conformations d'assemblage 14, 15 présentent une forme en queue d'aronde à raccords angulaires arrondis. Les surfaces d'emboîtement 16, 17 des conformations d'assemblage 14, 15 sont dépourvues d'arête.

Les pièces 71, 12, 13 sont réalisées à partir de poudre de matériau magnétique compactée. Une chambre correspondant à la forme de la pièce recherchée est composée d'une paroi latérale périphérique fixe dans laquelle peuvent coulisser un vérin inférieur et un vérin supérieur. Le compactage de la poudre s'effectue par exemple à une pression de 400 MPa. La pièce compactée est ensuite placée par exemple dans un four présentant une température de 500°C sous atmosphère ventilée, pendant une demi-heure. La précision obtenue pour les pièces 11, 12, 13 est suffisante pour permettre un assemblage sans rectification ultérieure. La cohésion des pièces 11, 12, 13 est suffisante pour garantir la solidité de l'assemblage.

Les faces latérales 23, 24, 31 et les surfaces d'emboîtement 16, 17 définies par des génératrices évoluant selon la direction axiale 10 ainsi que les faces planes 21, 22, 30 permettent de simplifier la conception de l'outillage utilisé pour la réalisation des pièces 11, 12, 13 du stator 1.

Les trois pièces 11, 12, 13 sont avantageusement identiques et peuvent être obtenues à partir d'un même moule. Le stator 1 est composé des pièces 11, 12, 13 assemblées comportant des surfaces d'emboîtement 16, 17. Les pièces 11, 12, 13 constituent les noyaux 3.

A titre de variante pour le premier exemple de réalisation, les pièces 11, 12, 13 ne comportent pas nécessairement trois noyaux, et ne sont pas nécessairement au nombre de trois. Par exemple, chaque pièce peut ne comporter qu'un seul noyau. Par ailleurs, un noyau peut être formé par l'assemblage d'au moins deux pièces dont l'une au moins constitue une partie de la base.

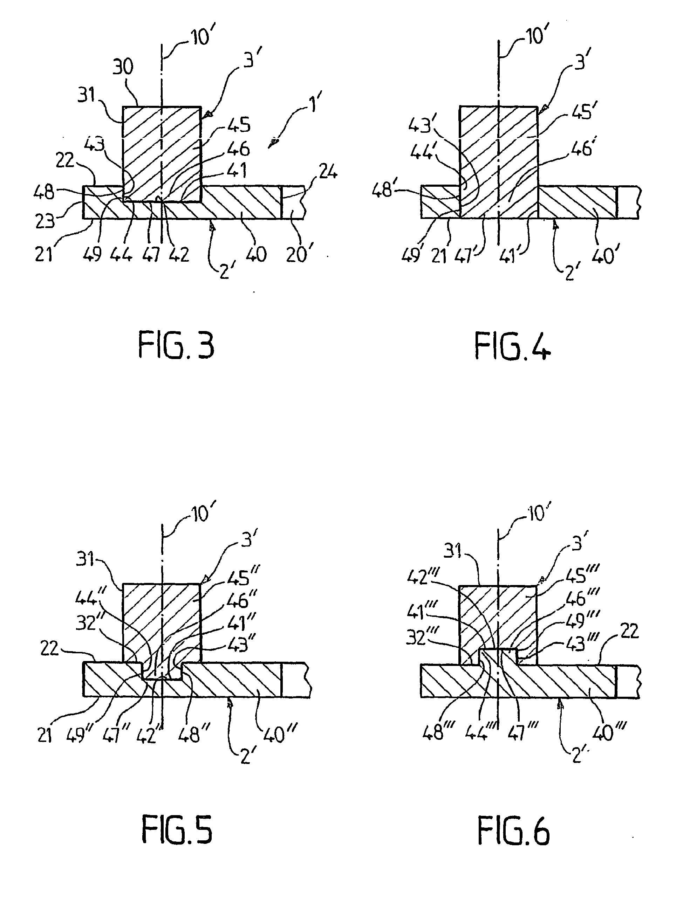

La figure 3 présente un deuxième exemple de réalisation d'un stator 1' comportant des noyaux 3' s'élevant depuis une base 2' selon une direction axiale 10'. Chaque noyau 3' est prévu pour recevoir une bobine, non représentée à la figure 3. La base 2' est annulaire et présente un passage central 20'. La base 2' est réalisée en une seule pièce 40 présentant une face inférieure 21, une face supérieure 22, une face latérale extérieure 23, une face latérale intérieure 24 et un passage central 20'. La pièce 40 est réalisée à partir de poudre de matériau magnétique compactée.

La face supérieure 22 de la pièce 40 comporte des logements 41 prévus pour recevoir chacun une pièce 45 formant l'un des noyaux 3'. Les pièces 45 sont réalisées à partir de poudre de matériau magnétique compactée. Chaque pièce 45 comporte une racine 46 prévue pour être montée dans l'un des logements 41. Les logements 41 comportent une paroi de fond 42 et une paroi latérale 43. Les racines 46 comportent une paroi inférieure 47 et une paroi latérale 48. Les parois de fond 42 et les parois inférieures 47 sont perpendiculaires à la direction axiale 10'. Les parois latérales 43, 48 sont définies par une génératrice parallèle à la direction axiale 10'. Les parois de fond 42 et les parois latérales 43 forment des surfaces d'emboîtement 44 des pièces 40. Les parois inférieures 47 et les parois latérales 48 forment des surfaces d'emboîtement 49 des pièces 45. Les surfaces d'emboîtement 44, 49 sont avantageusement définies par une génératrice parallèle à la direction axiale 10'. Les surfaces d'emboîtement 44, 49 sont avantageusement dépourvues d'arête. Les surfaces d'emboîtement 44 sont rentrantes. Les surfaces d'emboîtement 49 sont saillantes. Les pièces 45 montées dans la pièce 40 présentent une face supérieure 30 et une face latérale 31. La face latérale 31 prolonge la paroi latérale 48 de la racine 46.

Cette disposition permet de réduire la hauteur du moule utilisé pour la réalisation de la pièce 40 formant la base 2', du fait que les noyaux 3' n'appartiennent pas à la pièce 40. Les pièces 45 formant les noyaux 3' sont avantageusement identiques. La réalisation des moules des pièces 45 formant les noyaux 3' est particulièrement simple, du fait que les faces latérales 31 prolongent les parois latérales 48.

Le stator 1' est composé de la pièce 40 et des pièces 45 assemblées, la pièce 40 présentant des surfaces d'emboîtement 44 et les pièces 45 comportant des surfaces d'emboîtement 49.

Les figures 4 à 6 illustrent des variantes de réalisation relatives à l'assemblage entre la pièce formant la base 2' du stator et les pièces formant les noyaux 3' du stator. Les pièces formant les noyaux 3' sont réalisées à partir de poudre de matériau magnétique compactée.

La variante de réalisation illustrée à la figure 4 diffère de l'exemple de réalisation précédent en ce que la base 2' est formée par une pièce 40' présentant des logements 41' débouchant dans la face inférieure 21. Les logements 41' traversent la base 2' et présentent une paroi latérale 43'. Chacun des noyaux 3' est formé par une pièce 45' présentant une racine 46'. La racine 46' présente une paroi latérale 48' dont la hauteur est plus importante que la hauteur de la paroi latérale 48 de la racine 46 du deuxième exemple de réalisation. La paroi inférieure 47' de la racine 46' se situe dans le plan de la face inférieure 21 de la pièce 40' formant la base 2'. Les parois latérales 43' des logements 41' forment des surfaces d'emboîtement 44' des pièces 40' et les parois latérales 48' des racines 46' forment des surfaces d'emboîtement 49' des pièces 45'. Les surfaces d'emboîtement 44' sont rentrantes et les surfaces d'emboîtement 49' sont saillantes. La hauteur plus importante des surfaces d'emboîtement 44', 49' permet un meilleur assemblage des pièces 45' dans la pièce 40'. La face latérale 31 prolonge la paroi latérale 48' de la racine 46'.

Dans la variante de réalisation illustrée à la figure 5, la base 2' est formée par une pièce 40" présentant des logements 41" ayant une section plus réduite que la section des noyaux 3'. Chacun des noyaux 3' est formé par une pièce 45" présentant une racine 46" présentant une paroi inférieure 47" de surface plus réduite que la paroi inférieure 47 du deuxième exemple de réalisation. La racine 46" est entourée par une face inférieure 32" perpendiculaire à la direction axiale 10'. La face inférieure 32" est annulaire et vient sur la face supérieure 22 de la pièce 40". La racine 46" présente une paroi latérale 48" raccordée à la face latérale 31 par la face inférieure 32". Les parois de fond 42" et les parois latérales 43" des logements 41" forment des surfaces d'emboîtement 44" des pièces 40". Les parois inférieures 47" et les parois latérales 48" des racines 46" forment des surfaces d'emboîtement 49" des pièces 45". Les surfaces d'emboîtement 44" sont rentrantes et les surfaces d'emboîtement 49" sont saillantes. Du fait de la taille plus réduite des parois de fond 42" et des parois inférieures 47", les surfaces d'emboîtement 44", 49" permettent également un très bon assemblage des pièces 45" dans la pièce 40".

A titre de variante complémentaire, le logement 41" pourrait déboucher dans la paroi inférieure 21 de la pièce 40". A titre de variante complémentaire, la face latérale 31 ne prolonge pas nécessairement la paroi latérale 48" de la racine 46".

Dans la variante de réalisation illustrée à la figure 6, la base 2' est formée par une pièce 40"' présentant des racines 46"', ou protubérances, issues de la face supérieure 22 et les logements 41"' sont ménagés dans les pièces 45"' formant ies noyaux 3'. Chaque logement 41'" est entouré par une face inférieure 32'" perpendiculaire à la direction axiale 10'. La face inférieure 32"' vient sur la face supérieure 22 de la pièce 40"'. La face latérale 31 prolonge la paroi latérale 48"' de la racine 46"'. Les parois supérieures 47" et les parois latérales 48"' des racines 46"' forment des surfaces d'emboîtement 44"' des pièces 40"'. Les parois de fond 42"' et les parois latérales 43"' des logements 41"' forment des surfaces d'emboîtement 49"' des pièces 45"'. Les surfaces d'emboîtement 44"' sont saillantes et les surfaces d'emboîtement 49"' sont rentrantes. Du fait de la taille plus réduite des parois de fond 42"' et des parois inférieures 47"', les surfaces d'emboîtement 44"', 49"' permettent également un très bon assemblage des pièces 45'" dans les pièces 40"'.

A titre de variante complémentaire, le logement 41"' pourrait déboucher dans la paroi supérieure 30 de la pièce 45"'. A titre de variante complémentaire, la face latérale 31 ne prolonge pas nécessairement la paroi latérale 48"' de la racine 46"'.

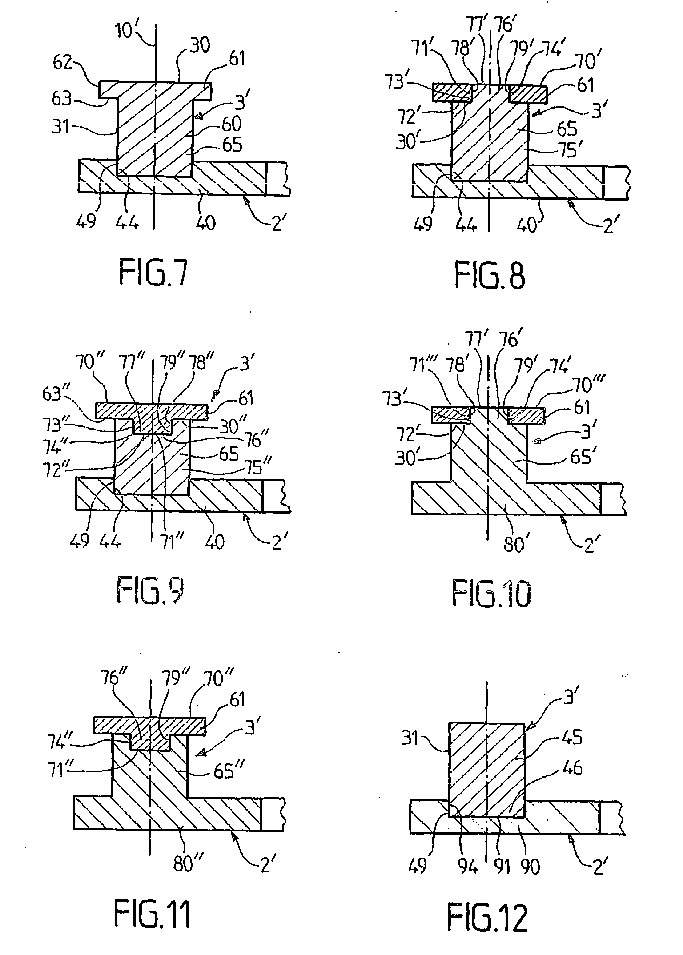

Les variantes de réalisation illustrées aux figures 7 à 9 se rapportent à des variantes de réalisation des noyaux du stator.

La variante de réalisation illustrée à la figure 7 diffère de l'exemple de réalisation illustré à la figure 3 en ce que les noyaux 3' sont formés par une pièce 60 présentant un chapeau 61 s'étendant latéralement au-dessus de la paroi latérale 31 appartenant à un montant 65. La paroi supérieure 30 de la pièce 60 forme la paroi supérieure du chapeau 61. La paroi supérieure 30 est perpendiculaire à la direction axiale 10'. Le chapeau 61 présente une paroi latérale 62 définie par une génératrice parallèle à la direction axiale 10'. Le chapeau 61 présente une paroi inférieure 63 perpendiculaire à la direction axiale 10'. La paroi inférieure 63 relie la paroi latérale 62 et la paroi latérale 31.

Les variantes de réalisation illustrées aux figures 8 et 9 diffèrent de la variante de réalisation précédente en ce que les noyaux 3' sont réalisés en plusieurs pièces.

Dans la variante de réalisation illustrée à la figure 8, le chapeau 61 est formé par une pièce 70' assemblée avec une pièce 75' formant le montant 65 du noyau 3'. La pièce 75' est assemblée avec la pièce 40 formant la base 2'. La pièce 70' présente un logement 71' recevant un tenon 76' issu de la face supérieure 30' de la pièce 75'. Le tenon 76' présente une paroi supérieure 77' et une paroi latérale 78'. Le logement 71' présente une paroi latérale 73'. La pièce 70' présente une paroi inférieure 72' reposant sur la paroi supérieure 30' de la pièce 75'. La paroi supérieure 77' est perpendiculaire à la direction axiale 10'. Les parois latérales 73', 78' forment des surfaces d'emboîtement 74', 79' avantageusement définies par des génératrices parallèles à la direction axiale 10'. Les surfaces d'emboîtement 74' sont rentrantes et les surfaces d'emboîtement 79' sont saillantes. Les surfaces d'emboîtement 74', 79' sont avantageusement dépourvues d'arête.

A titre de variante complémentaire, le logement 71' ne traverse pas nécessairement la pièce 70'. Egalement à titre de variante complémentaire, la pièce 70' peut former une partie du montant 65. Egalement à titre de variante complémentaire, la pièce 70' n'est pas nécessairement réalisée à partir de poudre de matériau magnétique compactée, mais peut par exemple être réalisée à partir d'un empilage de tôles magnétiques.

La variante de réalisation illustrée à la figure 9 diffère de la variante précédente en ce que la pièce 70" formant le chapeau 61 présente un tenon 76" issu de la paroi inférieure 72" et en ce que la pièce 60" formant le montant 65 présente un logement 71" recevant le tenon 76". La pièce 70" présente une face inférieure 63" reposant sur la face supérieure 30" de la pièce 75". Le tenon 76" présente une paroi inférieure 77" et une paroi latérale 78". Le logement 71" présente une paroi de fond 72" et une paroi latérale 73". La paroi supérieure 77" est perpendiculaire à la direction axiale 10'. Les parois latérales 73", 78" forment des surfaces d'emboîtement 74", 79". Les surfaces d'emboîtement 74" sont saillantes et les surfaces d'emboîtement 79" sont rentrantes.

A titre de variante complémentaire, le logement 71" peut traverser la pièce 75". Egalement à titre de variante complémentaire, la pièce 70" peut former une partie du montant 65. Egalement à titre de variante complémentaire, la pièce 75" n'est pas nécessairement réalisée à partir de poudre de matériau magnétique compactée, mais peut par exemple être réalisée à partir d'un empilage de tôles magnétiques.

Les variantes de réalisation illustrées aux figures 10 et 11 sont des variantes du deuxième exemple de réalisation illustré à la figure 3, dans lesquelles une partie des noyaux est solidaire de la base.

La variante de réalisation illustrée à la figure 10 diffère de la variante de réalisation illustrée à la figure 8 en ce que la base 2' et le montant 65' du noyau 3' sont formés par une pièce 80' réalisée à partir de poudre de matériau magnétique compactée, et en ce que la pièce 70''' formant le chapeau 61 du noyau 3' est réalisée à partir d'un empilage de tôles magnétiques. La pièce 70''' présente un logement 71'''.

A titre de variante complémentaire, le logement 71'" ne traverse pas nécessairement la pièce 70"'. Egalement à titre de variante complémentaire, la pièce 70"' n'est pas nécessairement réalisée à partir d'un empilage de tôles magnétiques, mais peut par exemple être réalisée à partir de poudre de matériau magnétique compactée.

La variante de réalisation illustrée à la figure 11 diffère de la variante de réalisation illustrée à la figure 9 en ce que la base 2' et le montant 65" du noyau 3' sont réalisés en une pièce 80" réalisée à partir de poudre de matériau magnétique compactée. A titre de variante complémentaire, les logements 71" peuvent traverser la pièce 80".

La variante de réalisation illustrée à la figure 12 diffère de l'exemple de réalisation illustré à la figure 4 en ce que la base 2' est formée par une pièce 90 obtenue à partir d'un empilage de tôles magnétiques. La pièce 90 comporte des logements 91 recevant la racine 46' de l'une des pièces 45' formant les noyaux 3'. Les logements 91 forment des surfaces d'emboîtement 94 rentrantes coopérant avec des surfaces d'emboîtement 49' saillantes des racines 46'.

A titre de variante complémentaire, les logements 91 ne traversent pas nécessairement la pièce 90. Egalement à titre de variante complémentaire, la racine 46' ne prolonge pas nécessairement la paroi latérale 31. Egalement à titre de variante complémentaire, la base 2' peut comporter ou être formée par plusieurs pièces obtenues à partir d'un empilage de tôles magnétiques. Egalement à titre de variante complémentaire une ou plusieurs des pièces 45' formant l'un des noyaux peut former également une partie de la base 2'.

Dans le deuxième exemple de réalisation et ses différentes variantes, les surfaces d'emboîtement sont dépourvues d'arête et sont définies par une génératrice parallèle à la direction axiale 10'. Les pièces 40, 40', 40", 40"', 60, 70', 75', 70", 75", 80', 80" sont réalisées à partir de poudre de matériau magnétique compactée et constituent au moins partiellement les noyaux 3'. Les pièces 40, 40', 40", 40"', 60 constituent entièrement les noyaux 3'.

A titre de variante pour le deuxième exemple de réalisation, la base 2' du stator peut être réalisée en plusieurs pièces, notamment en plusieurs pièces obtenues par compactage de poudre de matériau magnétique.

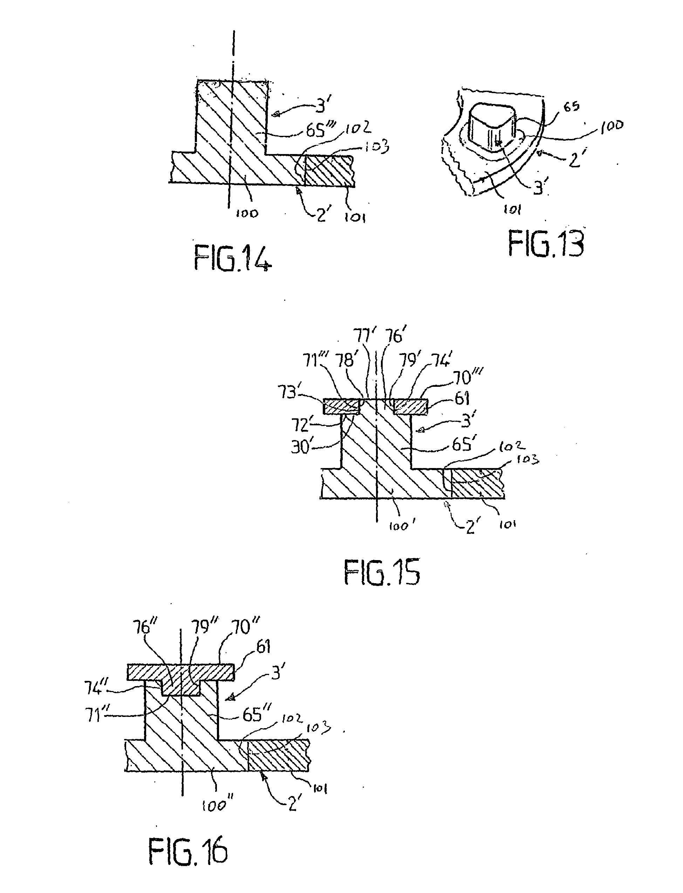

L'emboîtement entre les pièces de la base 2' peut notamment être conforme à l'emboîtement des pièces 11, 12, 13 de la base 2 du premier exemple de réalisation. D'autres emboîtements sont toutefois envisageables, tels qu'une pièce 101 entourant une pièce 100, comme illustré par exemple sur la figure 13.

La figure 14 illustre une telle variante, dans laquelle la base 2' comporte une pièce 100 présentant un montant 65"' formant l'un des noyaux 3'. La base 2' comporte également une pièce 101. Les pièces 100, 101 assemblées présentent des surfaces d'emboîtement 102, 103. Tel qu'illustré à la figure 13, la pièce 101 est dépourvue de montant formant un noyau. La pièce 101 peut être annulaire. En alternatives plusieurs pièces 101 identiques ou différentes peuvent être assemblées entre elles ou avec des pièces 100 comportant au moins une partie d'un noyau 3'. La ou les pièces 101 peuvent être réalisées à partir de poudre de matériau magnétique compactée ou à partir d'un empilage de tôles magnétiques. Les pièces 100 comportant une partie de la base 2' sont réalisées à partir de poudre de matériau magnétique compactée.

La figure 15 illustre une autre variante du type précité, dans laquelle le noyau 3' correspond au noyau de la variante de la figure 10. Le montant 65' de la pièce 100' correspond au montant 65' de la pièce 80'.

La figure 16 illustre une autre variante du type précité, dans laquelle le noyau 3' correspond au noyau de la variante de la figure 11. Le montant 65" de la pièce 100" correspond au montant 65" de la pièce 80".

A titre de variante pour le premier ou le deuxième exemple de réalisation, les surfaces d'emboîtement 16, 17 ; 102, 103 ne sont pas nécessairement ménagées uniquement dans la base 2, 2'. Les surfaces d'emboîtement 16, 17 ; 102, 103 peuvent par exemple traverser au moins l'un des noyaux 3, 3'.

A titre de variante additionnelle pour l'un ou l'autre des exemples de réalisation, les surfaces d'emboîtement peuvent comporter une ou plusieurs arêtes. Egalement à titre de variante additionnelle pour l'un ou l'autre des exemples de réalisation les surfaces d'emboîtement ne sont pas nécessairement définies par une génératrice parallèle à la direction axiale, mais peuvent notamment être tronconiques.

A titre de variante additionnelle pour l'un ou l'autre des exemples de réalisation, la base 2, 2' du stator 1 ne comporte pas nécessairement de passage 20, 20'. Le nombre de pôles du stator 1 n'est pas nécessairement de neuf ; le nombre de pôles du rotor 5 n'est pas nécessairement de six. L'alimentation du moteur n'est pas nécessairement triphasée.

A titre de variante additionnelle pour l'un ou l'autre des exemples de réalisation les surfaces d'emboîtement peuvent comporter plusieurs parties saillantes et/ou plusieurs parties rentrantes.

Les différents exemples et variantes de réalisation décrits peuvent être combinés entre eux.

La présente invention n'est nullement limitée aux exemples de réalisation décrits et à leurs variantes, mais englobe de nombreuses modifications dans le cadre des revendications.

## Revendications

1. Stator pour moteur électrique à flux axial, réalisé au moins partiellement à partir de poudre de matériau magnétique compactée, comportant des noyaux (3 ; 3') s'élevant selon une direction axiale (10 ; 10') à partir d'une base (2 ; 2'), les noyaux (3; 3') étant agencés circulairement sur la base (2 ; 2'), chaque noyau (3 ; 3') étant prévu pour recevoir une bobine (4), ledit stator étant composé de pièces (11, 12, 13; 100, 101 ; 100', 101; 100", 101) assemblées comportant des surfaces d'emboîtement (16, 17 ; 44, 49; 44', 49' ; 44", 49" ; 44"', 49"' ; 74', 79' ; 74", 79" ; 94, 49' ; 102, 103), certaines des pièces (11, 12, 13 ; 100; 100'; 100") constituant au moins partiellement lesdits noyaux (3 ; 3') étant réalisées à partir de poudre de matériau magnétique compactée, **caractérisé en ce que** la base (2 ; 2') est constituée de plusieurs pièces (11, 12, 13; 100, 101 ; 100', 101 ; 100", 101) assemblées comportant au moins certaines des surfaces d'emboîtement (16, 17 ; 102, 103) et **en ce qu'**autour des noyaux (3; 3') la base (2 ; 2') est réalisée à partir de poudre de matériau magnétique compactée.

2. Stator selon la revendication 1, **caractérisé en ce que** la base (2; 2') est annulaire.

3. Stator selon la revendication 2, **caractérisé en ce que** les surfaces d'emboîtement (16, 17) des pièces (11, 12 , 13) tronçonnent la base (2 ; 2') annulaire.

4. Stator selon l'une des revendications 1 à 3, **caractérisé en ce que** la base (2, 2') est réalisée en plusieurs pièces (11, 12, 13; 100, 101 ; 100', 101 ; 100", 101) assemblées réalisées à partir de poudre de matériau magnétique compactée et comportant au moins certaines des surfaces d'emboîtement (16, 17 ; 102, 103).

5. Stator selon la revendication 4, **caractérisé en ce qu'**au moins une des pièces (45 ; 45' ; 45") constituant au moins partiellement l'un des noyaux (3') comporte une racine (46 ; 46' ; 46"), respectivement un logement (41'"), monté(e) dans un logement (41 ; 41' ; 41"), respectivement sur une racine (46"'), ménagé(e) dans/sur la ou l'une des pièces (40 ; 40' ; 40" ; 40"') constituant la base (2'), les surfaces d'emboîtement (44, 49 ; 44', 49' ; 44", 49" ; 44"' ; 49"') étant formées respectivement par une paroi latérale (48 ; 48' ; 48" ; 48"') de la racine et par une paroi latérale (43 ; 43' ; 43" ; 43"') du logement.

6. Stator selon la revendication 5, **caractérisé en ce qu'**au moins l'un des noyaux (3') présente une paroi latérale (31) prolongeant la paroi latérale (48 ; 48') formant la surface d'emboîtement (49 ; 49') de la racine (46 ; 46').

7. Stator selon l'une des revendications 5 ou 6, **caractérisé en ce qu'**au moins l'un des logements (41') traverse la ou l'une des pièces (40') constituant au moins une partie de la base (2').

8. Stator selon l'une des revendications 1 à 3, **caractérisé en ce que** la base (2 ; 2') est réalisée en plusieurs pièces (11, 12, 13 ; 100, 101 ; 100', 101 ; 100", 101) assemblées comportant certaines des surfaces d'emboîtement (16, 17 ; 102, 103), et **en ce que** les pièces (11, 12, 13 ; 100 ; 100' ; 100") constituant au moins partiellement lesdits noyaux (3 ; 3') comportent une partie de la base (2 ; 2').

9. Stator selon la revendication 8, **caractérisé en ce que** les pièces (11, 12, 13 ; 100 ; 100' ; 100") constituant au moins partiellement lesdits noyaux (3 ; 3') s'étendent autour desdits noyaux (3 ; 3') pour former une partie de la base (2 ; 2').

10. Stator selon l'une des revendications 8 ou 9, **caractérisé en ce que** la base (2') comporte une pièce (101) réalisée à partir de tôles magnétiques empilées et dépourvue de montant formant noyau.

11. Stator selon l'une des revendications 1 à 10, **caractérisé en ce que** les surfaces d'emboîtement (16, 17 ; 44, 49 ; 44', 49' ; 44", 49" ; 44"', 49"' ; 74', 79' ; 74", 79" ; 94, 49' ; 102, 103) sont définies par une génératrice parallèle à la direction axiale (10 ; 10').

12. Stator selon l'une des revendications 1 à 11, **caractérisé en ce que** les surfaces d'emboîtement (16, 17 ; 44, 49 ; 44', 49' ; 44", 49" ; 44"', 49"' ; 74', 79' ; 74", 79" ; 94, 49' ; 102, 103) sont dépourvues d'arête.

13. Stator selon l'une des revendications 1 à 12, **caractérisé en ce que** chaque noyau (3; 3') est formé par une ou plusieurs des pièces (11, 12, 13 ; 45 ; 45' ; 45" ; 45"' ; 60; 70', 75'; 70", 75"; 70", 80"; 100; 100'; 100") réalisées à partir de poudre de matériau magnétique compactée.

14. Stator selon l'une des revendications 1 à 13, **caractérisé en ce qu'**au moins deux des pièces (11, 12, 13 ; 80' ; 80"; 100 ; 100' ; 100") constituant au moins partiellement l'un des noyaux (3 ; 3') constituent aussi une partie de la base (2 ; 2').

15. Stator selon la revendication 14, **caractérisé en ce que** les surfaces d'emboîtement (16, 17 ; 102, 103) desdites pièces (11, 12, 13 ; 100, 101; 100', 101; 100", 101) sont ménagées dans la base (2 ; 2').

16. Stator selon l'une des revendications 1 à 15, **caractérisé en ce qu'**au moins l'un des noyaux (3') présente un montant (65 ; 65' ; 65") surmonté d'un chapeau (61).

17. Stator selon la revendication 16, **caractérisé en ce qu'**au moins une des pièces (75' ; 75" ; 80' ; 80") constituant partiellement l'un des noyaux (3') comporte un tenon (76'), respectivement un logement (71"), monté dans un logement (71'), respectivement sur un tenon (76"), ménagé dans/sur une autre des pièces (70' ; 70" ; 70"') constituant partiellement ledit noyau (3'), les surfaces d'emboîtement (74', 79' ; 74", 79") étant formées respectivement par une paroi latérale (78' ; 78") du tenon et par une paroi latérale (73' ; 73") du logement.

18. Stator selon l'une des revendications 1 à 17, **caractérisé en ce que** la ou l'une des pièces (11, 12, 13 ; 80' ; 80" ; 100 ; 100' ; 100") constituant au moins partiellement le montant (65' ; 65") de l'un des noyaux (3 ; 3') constitue aussi au moins une partie de la base (2 ; 2').

19. Stator selon l'une des revendications 1 à 18 **caractérisé en ce qu'**il comporte au moins deux pièces (11, 12, 13 ; 45 ; 45' ; 45" ; 45"' ; 60 ; 70' ; 70" ; 70"' ; 75' ; 75") identiques réalisées à partir de poudre de matériau magnétique compactée.

20. Stator selon l'une des revendications 1 à 19, **caractérisé en ce qu'**au moins l'une des pièces (11, 12, 13; 80'; 80"; 100; 100' ; 100") constituant au moins partiellement l'un des noyaux (3; 3') constitue aussi une partie de la base (2; 2').

## Claims

1. A stator for an axial flux electric motor, the stator being made at least in part out of a compacted powder of magnetic material, and comprising cores (3; 3') projecting in an axial direction (10; 10') from a base (2; 2'), the cores (3; 3') being arranged circularly on the base (2; 2'), each core (3; 3') being designed to receive a coil (4), said stator being made up of assembled-together parts (11, 12, 13; 100, 101; 100', 101; 100", 101) having engagement surfaces (16, 17; 44, 49; 44', 49'; 44"; 49"; 44"', 49"'; 74', 79'; 74", 79"; 94, 49'; 102, 103), some of the parts (11, 12, 13; 100; 100'; 100") constituting at least portions of said cores (3; 3') being made from a compacted powder of magnetic material, the stator being **characterized in that** the base (2; 2') is made up of a plurality of assembled-together parts (11, 12, 13; 100, 101; 100', 101; 100", 101) including at least some engagement surfaces (16, 17; 102, 103), and **in that** around the cores (3; 3'), the base (2; 2') is made from a compacted powder of magnetic material.

2. A stator according to claim 1, **characterized in that** the base (2; 2') is annular.

3. A stator according to claim 2, **characterized in that** the engagement surfaces (16, 17) of the parts (11, 12, 13) cut through the annular base (2; 2').

4. A stator according to any one of claims 1 to 3, **characterized in that** the base (2, 2') is made up of an assembly of a plurality of parts (11, 12, 13; 100, 101; 100', 101) made from a compacted powder of magnetic material and including at least some of the engagement surfaces (16, 17; 102, 103).

5. A stator according to claim 4, **characterized in that** at least one of the parts (45; 45'; 45") constituting at least a portion of one of the cores (3') includes a root (46; 46'; 46") or respectively a housing (41 "') that is mounted in a housing (41; 41', 41 ") or respectively on a root (46"') formed in or on the or one of the parts (40; 40'; 40"; 40"') constituting the base (2'), the engagement surfaces (44, 49, 44', 49'; 44", 49"; 44"'; 49"') being formed respectively on a side wall (48; 48'; 48"; 48"') of the root and by a side wall (43; 43'; 43"; 43"') of the housing.

6. A stator according to claim 5, **characterized in that** at least one of the cores (3') presents a side wall (31) extending the side wall (48; 48') forming the engagement surface (49; 49') of the root (46; 46').

7. A stator according to claim 5 or claim 6, **characterized in that** at least one of the housings (41') passes through the or one of the parts (40') constituting at least a portion of the base (2').

8. A stator according to any one of claims 1 to 3, **characterized in that** the base (2; 2') is made of a plurality of assembled-together parts (11, 12, 13; 100, 101; 100', 101; 100", 101) including some of the engagement surfaces (16, 17; 102, 103), and **in that** the parts (11, 12, 13; 100; 100';100") constituting at least a portion of said cores (3; 3') include a portion of the base (2; 2').

9. A stator according to claim 8, **characterized in that** the parts (11, 12, 13; 100; 100'; 100") constituting at least a portion of said cores (3; 3') extend around said cores (3; 3') to form a portion of the base (2; 2').

10. A stator according to claim 8 or claim 9, **characterized in that** the base (2') includes a part (101) made from a stack of magnetic laminations without any core-forming uprights.

11. A stator according to any one of claims 1 to 10, **characterized in that** the engagement surfaces (16, 17; 44, 49; 44', 49'; 44", 49"; 44"', 49"', 74', 79'; 74", 79"; 94, 49'; 102, 103) are defined by generator lines extending parallel to the axial direction (10; 10').

12. A stator according to any one of claims 1 to 11, **characterized in that** the engagement surfaces (16, 17; 44, 49; 44', 49'; 44", 49"; 44"', 49"', 74', 79'; 74", 79", 94, 49'; 102, 103) do not include any edges.

13. A stator according to any one of claims 1 to 12, **characterized in that** each core (3; 3') is formed by one or more parts (11, 12, 13; 45; 45'; 45"; 45"'; 60; 70', 75'; 70", 75"; 70", 80", 100; 100'; 100") made from a compacted powder of magnetic material.

14. A stator according to any one of claims 1 to 13, **characterized in that** at least two of the parts (11, 12, 13; 80'; 80"; 100; 100'; 100") constituting at least a portion of one of the cores (3; 3') also constitute a portion of the base (2; 2').

15. A stator according to claim 14, **characterized in that** the engagement surfaces (16, 17; 102, 103) of said parts (11, 12, 13; 100, 101; 100', 101; 100", 101) are formed in the base (2; 2').

16. A stator according to any one of claims 1 to 15, **characterized in that** at least one of the cores (3') presents an upright (65; 65'; 65") surmounted by a cap (61).

17. A stator according to claim 16, **characterized in that** at least one of the parts (75'; 75'; 80'; 80") constituting a portion of one of the cores (3') includes a tenon (76') or respectively a housing (71") mounted in a housing (71') or respectively on a tenon (76") formed on or in another one of the parts (70'; 70"; 70"') constituting a portion of said core (3'), the engagement surfaces (74', 79'; 74"; 79") being formed respectively by a side wall (78'; 78") of the tenon and by a side wall (73'; 73") of the housing.

18. A stator according to any one of claims 1 to 17, **characterized in that** the or one of the parts (11, 12, 13; 80'; 80"; 100; 100'; 100") constituting at least a portion of the upright (65'; 65") of one of the cores (3; 3') also constitutes at least a portion of the base (2; 2').

19. A stator according to any one of claims 1 to 18, **characterized in that** it includes at least two identical parts (11, 12, 13; 45; 45'; 45"; 45"'; 60; 70'; 70"; 70"'; 75'; 75") made from a compacted powder of magnetic material.

20. A stator according to any one of claims 1 to 19, **characterized in that** at least one of the parts (11, 12, 13; 80'; 80"; 100; 101'; 100") constituting at least a portion of one of the cores (3; 3') also constitutes a portion of the base (2; 2').

## Patentansprüche

1. Stator für einen Elektromotor mit Axialfluss, der zumindest teilweise aus gepresstem Pulver aus magnetischem Material hergestellt ist und Kerne (3; 3') aufweist, die sich ausgehend von einer Basis (2; 2') in eine axiale Richtung (10; 10') nach oben erstrecken, wobei die Kerne (3; 3') kreisförmig an der Basis (2; 2') angeordnet sind, jeder Kern (3; 3') dazu vorgesehen ist, eine Spule (4) aufzunehmen, der Stator aus zusammengesetzten Teilen (11, 12, 13; 100, 101; 100', 101; 100", 101) besteht, die Einsteckflächen (16, 17; 44, 49; 44', 49'; 44", 49"; 44"', 49"'; 74', 79'; 74", 79"; 94, 49'; 102, 103) aufweisen, und einige der Teile (11, 12, 13; 100; 100';100"), die zumindest teilweise die Kerne (3; 3') bilden, aus gepresstem Pulver aus magnetischem Material hergestellt sind, **dadurch gekennzeichnet, dass** die Basis (2; 2') aus mehreren zusammengesetzten Teilen (11, 12, 13; 100, 101; 100', 101; 100", 101) besteht, die zumindest einige der Einsteckflächen (16, 17; 102, 103) aufweisen, und dass die Basis (2; 2') um die Kerne (3; 3') herum aus gepresstem Pulver aus magnetischem Material hergestellt ist.

2. Stator nach Anspruch 1, **dadurch gekennzeichnet, dass** die Basis (2; 2') ringförmig ist.

3. Stator nach Anspruch 2, **dadurch gekennzeichnet, dass** die Einsteckflächen (16, 17) der Teile (11, 12, 13) die ringförmige Basis (2; 2') in Stücke teilen.

4. Stator nach einem der Ansprüche 1 bis 3, **dadurch gekennzeichnet, dass** die Basis (2; 2') aus mehreren zusammengesetzten Teilen (11, 12, 13; 100, 101; 100', 101; 100", 101) besteht, die aus gepresstem Pulver aus magnetischem Material hergestellt sind und zumindest einige der Einsteckflächen (16, 17; 102, 103) aufweisen.

5. Stator nach Anspruch 4, **dadurch gekennzeichnet, dass** mindestens eines der Teile (45; 45'; 45"), das zumindest teilweise einen der Kerne (3') bildet, einen Fußabschnitt (46; 46'; 46") bzw. eine Aufnahme (41''') aufweist, der in einer Aufnahme (41; 41'; 41") bzw. die an einem Fußabschnitt (46''') angebracht ist, die bzw. der in/an dem oder einem der Teile (40; 40'; 40"; 40''') ausgebildet ist, welches die Basis (2') bildet, wobei die Einsteckflächen (44, 49; 44', 49'; 44", 49"; 44"'; 49"') durch eine Seitenwand (48; 48'; 48"; 48"') des Fußbereichs bzw. durch eine Seitenwand (43; 43'; 43"; 43"') der Aufnahme gebildet sind.

6. Stator nach Anspruch 5, **dadurch gekennzeichnet, dass** mindestens einer der Kerne (3') eine Seitenwand (31) aufweist, die die Seitenwand (48; 48') verlängert, welche die Einsteckfläche (49; 49') des Fußbereichs (46; 46') bildet.

7. Stator nach Anspruch 5 oder 6, **dadurch gekennzeichnet, dass** mindestens eine der Aufnahmen (41') das Teil oder eines der Teile (40') durchquert, welches zumindest einen Abschnitt der Basis (2') bildet.

8. Stator nach einem der Ansprüche 1 bis 3, **dadurch gekennzeichnet, dass** die Basis (2; 2') aus mehreren zusammengesetzten Teilen (11, 12, 13; 100, 101; 100', 101; 100", 101) besteht, die einige der Einsteckflächen (16, 17; 102, 103) aufweisen, und dass die Teile (11, 12, 13; 100; 100'; 100"), die zumindest teilweise die Kerne (3; 3') bilden, einen Abschnitt der Basis (2; 2') aufweisen.

9. Stator nach Anspruch 8, **dadurch gekennzeichnet, dass** sich die Teile (11, 12, 13; 100; 100'; 100"), die zumindest teilweise die Kerne (3; 3') bilden, um die Kerne (3; 3') herum erstrecken, um einen Abschnitt der Basis zu bilden (2; 2').

10. Stator nach Anspruch 8 oder 9, **dadurch gekennzeichnet, dass** die Basis (2') ein Teil (101) aufweist, das aus gestapelten Magnetblechen hergestellt ist und keine Säule aufweist, die einen Kern bildet.

11. Stator nach einem der Ansprüche 1 bis 10, **dadurch gekennzeichnet, dass** die Einsteckflächen (16, 17; 44, 49; 44', 49'; 44", 49"; 44"', 49"'; 74', 79'; 74", 79"; 94, 49'; 102, 103) durch eine zur Axialrichtung (10; 10') parallel verlaufende Mantellinie definiert sind.

12. Stator nach einem der Ansprüche 1 bis 11, **dadurch gekennzeichnet, dass** die Einsteckflächen (16, 17; 44, 49; 44', 49'; 44", 49"; 44"', 49"'; 74', 79'; 74", 79"; 94, 49'; 102, 103) kantenlos sind.

13. Stator nach einem der Ansprüche 1 bis 12, **dadurch gekennzeichnet, dass** jeder Kern (3; 3') durch eines oder mehrere der Teile (11, 12, 13; 45; 45'; 45"; 45"'; 60; 70'; 75'; 70"; 75"; 70", 80"; 100; 100'; 100") gebildet ist, welche aus gepresstem Pulver aus magnetischem Material hergestellt sind.

14. Stator nach einem der Ansprüche 1 bis 13, **dadurch gekennzeichnet, dass** mindestens zwei der Teile (11, 12, 13; 80'; 80"; 100; 100'; 100"), die zumindest teilweise einen der Kerne (3; 3') bilden, auch einen Abschnitt der Basis (2; 2') bilden.

15. Stator nach Anspruch 14, **dadurch gekennzeichnet, dass** die Einsteckflächen (16, 17; 102, 103) der Teile (11, 12, 13; 100, 101; 100', 101; 100", 101) in der Basis (2; 2') ausgebildet sind.

16. Stator nach einem der Ansprüche 1 bis 15, **dadurch gekennzeichnet, dass** mindestens einer der Kerne (3') eine Säule (65; 65'; 65") aufweist, über der eine Kappe (61) angeordnet ist.

17. Stator nach Anspruch 16, **dadurch gekennzeichnet, dass** mindestens eines der Teile (75'; 75"; 80'; 80"), das teilweise einen der Kerne (3') bildet, einen Zapfen (76') bzw. eine Aufnahme (71 ") aufweist, der in einer Aufnahme (71') bzw. die an einem Zapfen (76") angebracht ist, die bzw. der in/an einem anderen der Teile (70'; 70"; 70"') ausgebildet ist, das den Kern (3') teilweise bildet, wobei die Einsteckflächen (74', 79'; 74", 79") durch eine Seitenwand (78'; 78") des Zapfens bzw. durch eine Seitenwand (73'; 73") der Aufnahme gebildet sind.

18. Stator nach einem der Ansprüche 1 bis 17, **dadurch gekennzeichnet, dass** das Teil oder eines der Teile (11, 12, 13; 80'; 80"; 100; 100'; 100"), das die Säule (65'; 65") eines der Kerne (3; 3') zumindest teilweise bildet, auch mindestens einen Abschnitt der Basis (2; 2') bildet.

19. Stator nach einem der Ansprüche 1 bis 18, **dadurch gekennzeichnet, dass** er mindestens zwei identische Teile (11, 12, 13; 45; 45'; 45"; 45"'; 60; 70'; 70"; 70"'; 75'; 75") aufweist, die aus gepresstem Pulver aus magnetischem Material hergestellt sind.

20. Stator nach einem der Ansprüche 1 bis 19, **dadurch gekennzeichnet, dass** mindestens eines der Teile (11, 12, 13; 80'; 80"; 100; 100'; 100"), das einen der Kerne (3; 3') zumindest teilweise bildet, auch einen Abschnitt der Basis (2; 2') bildet.
